# EUROPÄISCHE PATENTSCHRIFT

(11) **EP 2 443 916 B1**
(45) Veröffentlichungstag und Bekanntmachung des Hinweises auf die Patenterteilung: **01.01.2014**
(21) Anmeldenummer: 11008354.0
(22) Anmeldetag: 17.10.2011
(51) Int. Cl.: A01B 59/06

(54) **Dreipunkt-Kuppelvorrichtung**
Three point coupling device
Dispositif de couplage à trois points

(30) Priorität: 21.10.2010 DE 102010049167
(43) Veröffentlichungstag der Anmeldung: 25.04.2012
(73) Patentinhaber: RAUCH Landmaschinenfabrik GmbH, 76547 Sinzheim (DE)
(72) Erfinder: Stöcklin, Volker, M.Sc., 77975 Ringsheim (DE); Doll, Franz, 76547 Sinzheim (DE); Gushurst, Hans, 76547 Sinzheim (DE); Rauch, Norbert, Dr.h.c., 76547 Sinzheim (DE); Schäfer, Fabian, 76473 Iffezheim (DE)
(74) Vertreter: Lasch, Hartmut

(56) Entgegenhaltungen:
- EP-A2- 2 225 925
- DE-A1- 3 812 198
- US-A- 3 220 751

## Beschreibung

Die Erfindung betrifft eine Dreipunkt-Kuppelvorrichtung mit zwei an einem Traktor oder dergleichen in horizontalem Abstand voneinander angeordneten Unterlenkern mit je einem Fangmaul und einem höher und mittig liegenden Oberlenker mit Fangmaul für ein landwirtschaftliches Anbaugerät, das untere Anschlusspunkte für die Unterlenker und einen oberen Anschlusspunkt für den Oberlenker aufweist.

Die modulare Kombination Traktor mit Anbaugerät hat sich weltweit bewährt, weil sie durch die Trennung von Leistungsbereitstellung und Arbeitsmaschine im Verhältnis zu selbstfahrenden Spezialmaschinen bei der Nutzung von vielen Arbeitsmaschinen mit einem Traktor enorme Kostenvorteile ermöglicht.

Voraussetzung ist eine effektive und einfach zu handhabende, elektrische, hydraulische und mechanische Leistungs-übertragungsschnittstelle als auch Anbauschnittstelle zwischen dem Traktor und dem Anbaugerät.

Für die Anbauschnittstelle hat sich weltweit der sogenannte Dreipunkt nach ISO 730 eingeführt. Mittels ver- und entriegelbarer Schnellkuppler in den Unterlenkern und dem längenverstellbaren Oberlenker mit Ver- und Entriegelung lassen sich die Anbaugeräte an- und abbauen.

Aufgrund der begrenzten Achslasten auf der Hinterachse des Traktors und der Mindestlast auf der Vorderachse weisen die Anbaugeräte zur Erzielung einer hohen Nutzlast, z.B. bei Anbau-Düngerstreuern, recht kurze Unterlenkeranschlüsse auf, wodurch sie sehr dicht zur Hinterachse an den Traktor angebaut werden können. Wenn jedoch die Unterlenker des Traktors bei gleichzeitig großer Bereifung recht kurz sind, dann ist der Anbauraum zwischen Traktor und Anbaugerät eingeschränkt. Zwar können die elektrischen, hydraulischen und mit der neuerdings verfügbaren längenverstellbaren Gelenkwelle (Telespace) auch die mechanischen Leistungsübertragungselemente in größerem Abstand von Traktor und Anbaugerät gekuppelt werden. Dadurch kann der Bediener bequem zwischen Traktor und Anbaugerät stehen. Auch lassen sich die Unterlenker mittels der Schnellverschlüsse automatisch beim Rückwärtsfahren mit den Unterlenkeranschlüssen des Anbaugerätes verbinden. Zum Einhängen des Oberlenkers an den Oberlenkeranschluss des Anbaugerätes muss der Bediener jedoch zwischen Anbaugerät und Traktor treten. Es kann dann vorkommen, dass nur wenig Platz zwischen den Traktorreifen und dem Anbaugerät bleibt. Der Bediener gelangt dann nur sehr unkomfortabel in den Freiraum zwischen Traktor und Anbaugerät.

Es ist eine Kuppelvorrichtung bekannt (DE 38 12 198), bei der die Bewegung des Oberlenkers von der der Unterlenker abgeleitet ist. Da die Ankuppelpunkte des Unter- und Oberlenkers der Anbaugeräte zwar genormt sind, diese Normen jedoch auch Toleranzen zulassen, findet insbesondere der Oberlenker den Oberlenkeranschlusspunkt des Anbaugerätes nicht. Dieses System hat sich deshalb in der Praxis nicht eingeführt.

Es sind weiterhin bereits Elemente zur traktorseitigen Fixierung des Oberlenkers vorgeschlagen worden (EP 1 982 853 A, EP 1 982 854 A1, EP 1 982 855 A1 US 3 220 751), durch die die Einleitung des Oberlenkers in den Oberlenkeranschlusspunkt des Anbaugerätes unterstützt werden soll. Jedoch muss auch hier die Einfädelung des Oberlenkers in den Oberlenkeranschlusspunkt durch händische Steuerung des Bedieners vorgenommen werden. Eine automatische Kopplung an den Oberlenkeranschluss des Anbaugerätes ist nicht vorgesehen, so dass der Bediener zwischen Traktor und Anbaugerät stehen muss und die zuvor geschilderten Probleme somit nicht beseitigt sind.

Schließlich ist aus der Praxis ein getrennter Dreipunkt-Rahmen bekannt, der in das Anbaugerät eingeklinkt ist. Er wird aus dem Anbaugerät ausgeklinkt und in die Unterlenker und den Oberlenker des Traktors eingehängt. Anschließend können alle Energieanschlüsse im Freiraum vorgenommen werden. Zum Schluss fährt der Fahrer mit dem Traktor an das Anbaugerät heran und hängt den Dreipunkt-Rahmen ein. Hierbei ist es sehr nachteilig und unkomfortabel, dass der schwere Dreipunkt-Rahmen mit einem Gewicht von ca. 30 bis 40 kg ausgehängt und in die Unterlenker und den Oberlenker eingehängt werden muss (Werbeschrift VICONTACT Ausgabe 14 ohne Druckvermerk). Beim Abbau ist dann wieder der umgekehrte Vorgang durchzuführen.

Der Erfindung liegt die Aufgabe zugrunde, eine Kupplungsvorrichtung zu schaffen, bei der nach dem Ankuppeln der Unterlenker ein Betreten des Raums zwischen denselben zum Einhängen des Oberlenkers nicht erforderlich ist. Die Vorrichtung soll außerdem kostengünstig herstellbar sein. Ferner sollen die statischen und dynamischen Kräfte am Oberlenkeranschlusspunkt problemlos aufgenommen werden.

Bei einer Vorrichtung gemäß dem Oberbegriff des Anspruchs 1 wird diese Aufgabe dadurch gelöst, dass am Anbaugerät eine Stützvorrichtung begrenzt gelenkig angeordnet ist, die beim Ankuppeln das Fangmaul des Oberlenkers auf einer Kurve mit einem oberhalb der den Anschlusspunkt einschließenden Horizontalebene liegenden Scheitel von oben her in den Anschlusspunkt eingreifend führt, wobei das Fangmaul des Oberlenkers und das Fangmaul beider Unterlenker in der Kupplungsposition durch Schnellkupplersicherungen an den Anschlusspunkten verriegelt sind.

Die erfindungsgemäß vorgesehene Stützvorrichtung sorgt dafür, dass das Fangmaul des Oberlenkers auf einer Kurve geführt wird, von deren Scheitel aus das Fangmaul von oben her in den Oberlenkeranschluss einfädelt. Dies geschieht automatisch bei Rückwärtsfahrt des Traktors.

In bevorzugter Ausführung ist vorgesehen, dass die Stützvorrichtung eine Schwinge, eine Koppel und eine Kurbel aufweist, die für die Kurvenführung des am freien Ende der Koppel eingehängten Oberlenkers im Bereich des Fangmauls sorgt.

Schwinge, Koppel und Kurbel bilden die kinematischen Elemente, um die Kurvenführung für das Fangmaul des Oberlenkers zu verwirklichen.

In weiterer Ausgestaltung der Kinematik ist vorgesehen, dass die Schwinge am Anbaugerät gelenkig gelagert und über ein Kniegelenk mit der Koppel verbunden ist, und dass die Kurbel am Anbaugerät gelagert ist und über ein Gelenk an der Koppel deren freies Ende auf der Kurve führt.

In der zum Traktor hin ausgeklappten Position befindet sich die Koppel der Stützvorrichtung in Bereitschaftsstellung.

Es ist weiterhin vorgesehen, dass die Koppel mit ihrem freien Ende in ein an der Unterseite des Oberlenkers im Bereich des Fangmauls angeordnetes Montageteil eingreift und über dieses das Fangmaul verrutschungssicher auf der Kurve von oben her auf den Oberlenkeranschluss führt.

Die mit ihrem freien Ende in das Montageteil eingreifende Koppel wird aus ihrer ausgeklappten Position bei Rückwärtsfahrt des Traktors zum Anbaugerät hin verschwenkt und führt dabei das Fangmaul des Oberlenkers in der Kurve in den Oberlenkeranschluss ein.

Vorzugsweise ist eine die Stützvorrichtung belastende Spannvorrichtung vorgesehen, die im einfachsten Fall eine vor dem Kuppelvorgang von Hand zu spannende Zugfeder aufweist, die einerseits am Anbaugerät eingehängt ist und andererseits an einem von der Koppel mitgeführten Teil jenseits des Gelenks der Koppel am Anbaugerät angreift.

Die Spannvorrichtung wird vor dem Kuppelvorgang aktiviert beispielsweise, wie bereits gesagt, von Hand vorgespannt. Beim Entkuppeln ist mittels der Spannvorrichtung das Fangmaul des Oberlenkers aus dem Oberlenkeranschluss aushebbar.

Der Oberlenker mit dem Montageteil verlässt bei Vorwärtsfahrt des Traktors nach Überschreiten des Scheitels der Kurve das freie Ende der Koppel und die Stützvorrichtung kehrt in ihre Ausgangslage zurück, bei der die Spannvorrichtung entspannt ist.

In vorteilhafter Ausführung ist ein von der Traktorkabine aus zu betätigendes Zugseil zur Entriegelung der Oberlenkeranschlusskupplersicherung vorgesehen. Desgleichen kann ein Zugseil zur Entriegelung der Spannvorrichtung vorgesehen sein.

Im Abwandlung hierzu kann statt des Zugseils zur Entriegelung der Oberlenkerschnellkupplersicherung ein elektrischer oder hydraulischer Aktuator vorgesehen sein. Ein eben solcher Aktuator kann statt des Zugseils zur Entriegelung der Spannvorrichtung vorgesehen sein.

Der Aktuator zur Entriegelung der Spannvorrichtung und/oder der Aktuator zur Entriegelung der Oberlenkerschnellkupplersicherung können über ein Bedienterminal betätigbar sein.

Als Bedienterminal kann auch dasjenige des Anbaugerätes oder des Traktors eingesetzt werden.

In Abwandlung hierzu können einer oder beide Aktuatoren mit einer drahtlosen Fernbedienung betätigbar sein.

Gemäß einem Ausführungsbeispiel ist vorgesehen, dass am Montageteil an der Unterseite des Oberlenkers auch der Aktuator für die Entriegelung der Oberlenkerschnellkupplersicherung integriert ist.

Oberlenker sind in der Regel längenverstellbar. Dies kann hydraulisch geschehen oder aber mittels Gewinde. In letzterem Fall sieht die Erfindung vor, dass die passende Einbaulänge vor dem Anbau für das entsprechende Anbaugerät festlegbar ist.

Hierzu kann ein Messstab am Anbaugerät angebracht sein, mittels dessen die Einbaulänge des Oberlenkers vor dem Kuppelvorgang einstellbar ist.

Stattdessen kann auch die Einbaulänge des Oberlenkers durch eine Markierung am Anbaugerät vorgemerkt sein, so dass der Bediener beispielsweise mittels eines Maßstabs die Einbaulänge einstellen kann.

Gemäß einer Alternative ist vorgesehen, dass am Oberlenker eine Markierung oder ein angebautes Markierungselement angebracht ist, die die zum Anbaugerät passende Einbaulänge anzeigt. Schließlich kann stattdessen vorgesehen sein, dass im Oberlenker ein Sensor eingebaut ist, mit dem die optimale Position bzw. Einbaulänge automatisiert angefahren wird.

Nachstehend ist die Erfindung anhand eines in der Zeichnung wiedergegebenen Ausführungsbeispiels unter Wiedergabe mehrerer Positionen beim Ankuppeln und Abkuppeln des Anbaugerätes beschrieben. In der Zeichnung zeigen:
- Fig. 1 bis 13: verschiedene Phasen beim An- und Abkuppeln des Anbaugerätes; und
- Fig. 14: verschiedene Positionen der Koppel der Stützvorrichtung zwischen dem herausgeklappten Zustand der Koppel und der Übergabeposition des Fangmauls des Oberlenkers an den Oberlenkeranschluss in schematischer Darstellung.

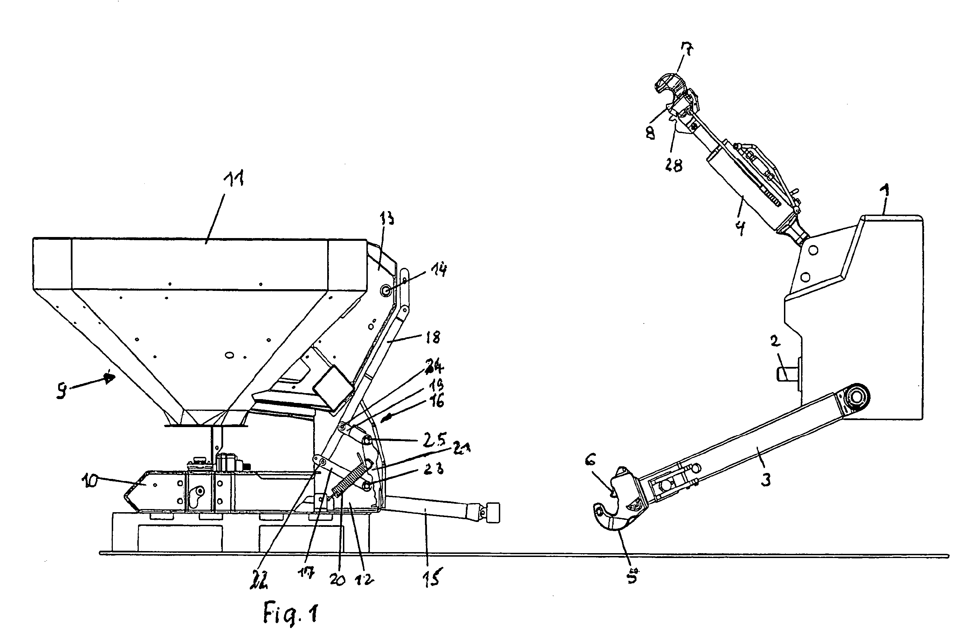

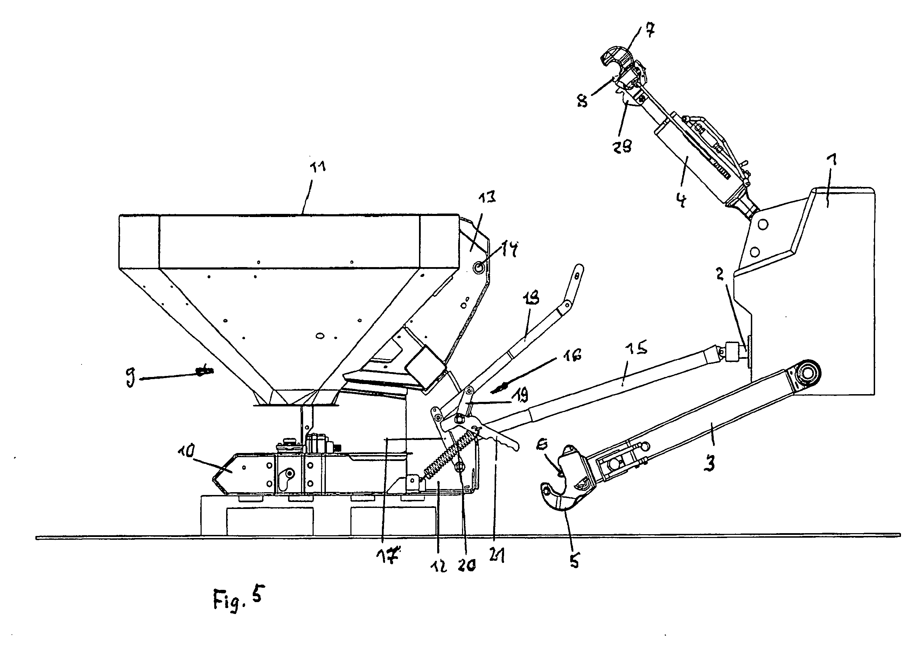

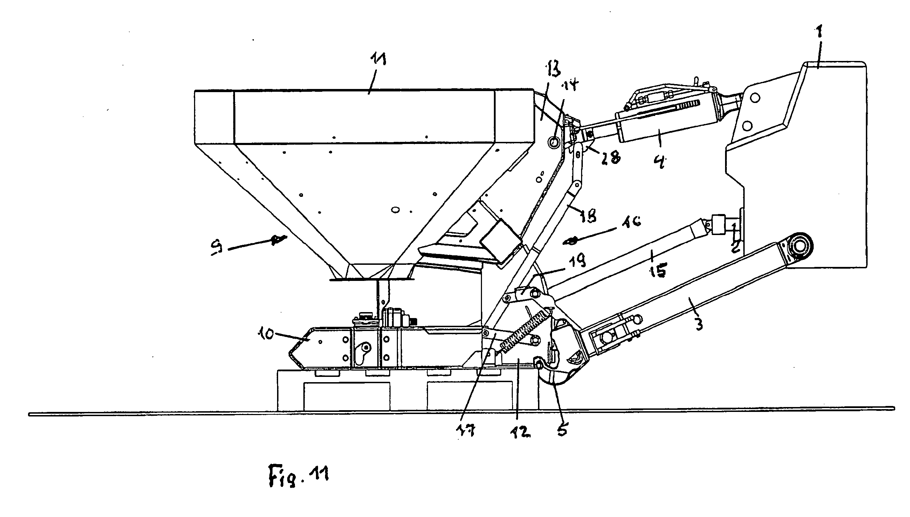

In der Fig. 1 bis 13 ist das Heck des Traktors mit einer Zapfwelle 2 und den in horizontalem Abstand voneinander angeordneten Unterlenkern 3 und einem dazwischen mittig, aber höher angeordneten Oberlenker 4 gezeigt. Die Unterlenker 3 sind am Traktor hydraulisch schwenkbar und der Oberlenker 4 gelenkig gelagert. Die Unterlenker 3 weisen je ein nach oben offenes Fangmaul 5 mit einer Verriegelung 6, der Oberlenker 4 ein nach unten offenes Fangmaul 7 mit Verriegelung 8 auf. Die Verriegelungen 6 und 8 sind jeweils Teil einer Schnellkupplersicherung.

Fig. 1 bis 13 zeigen ferner ein Anbaugerät 9 in Form eines Düngerstreuers mit einem Rahmen 10 und einem Düngerbehälter 11. Zu dem Rahmen 10 gehören u.a. im Wesentlichen aufrechte Rahmenteile 12 und 13. An dem unteren 12 dieser beiden Rahmenteile sind - in der Zeichnung nicht erkennbar - Unterlenkeranschlüsse in Form von Bolzen und am oberen Rahmenteil 13 ein Oberlenkeranschluss 14 in Form eines Bolzens festgelegt. Ist das Anbaugerät mit einem Getriebe zum Antrieb der Streuscheiben ausgestattet, weist es eine teleskopierbare Gelenkwelle 15 auf, die an die Zapfwelle 2 des Traktors angeschlossen wird.

An dem unteren Rahmenteil 12 ist eine Stützvorrichtung 16 gelagert, die eine Schwinge 17, eine Koppel 18 und eine Kurbel 19 aufweist. Ferner gehört zur Stützvorrichtung eine Spannvorrichtung - beim gezeigten Ausführungsbeispiel in Form einer Zugfeder 20 - die einerseits gerätsseitig eingehängt, andererseits mit einer Handhabe 21 zum Spannen versehen ist. Die Schwinge 17 ist mit der Koppel 18 über ein Kniegelenk 22 verbunden, während die Koppel 18 mit der Kurbel 19 über eine mit Abstand vom Kniegelenk 22 angeordnetes Gelenk 24 verbunden ist. Die Schwinge ist bei 23 und die Kurbel 19 bei 25 am unteren Rahmenteil 12 gelagert.

An der Unterseite des Oberlenkers 4 ist nahe dem Fangmaul ein Montageteil 26 befestigt, dessen Funktion später beschrieben wird.

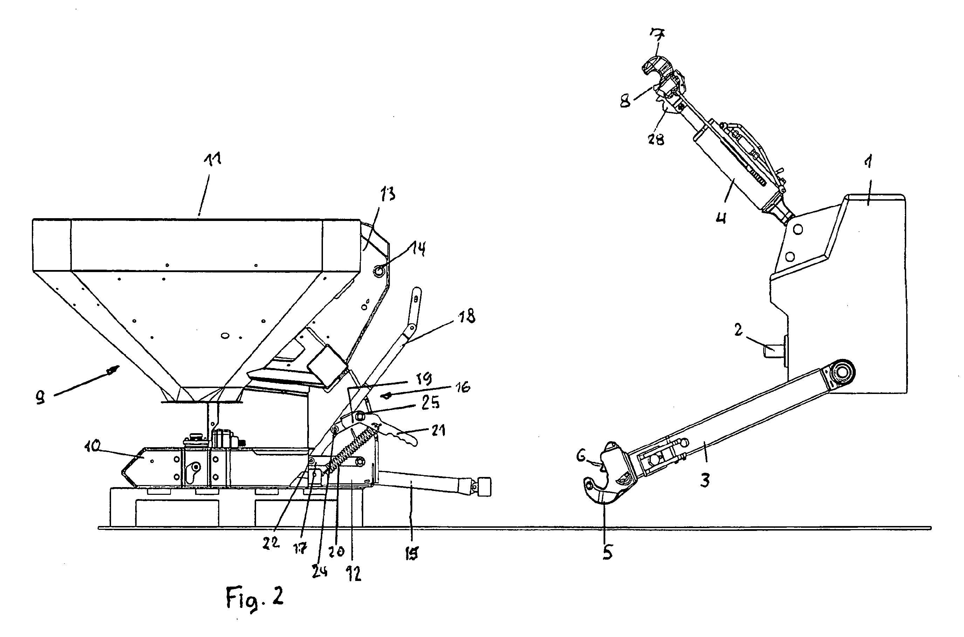

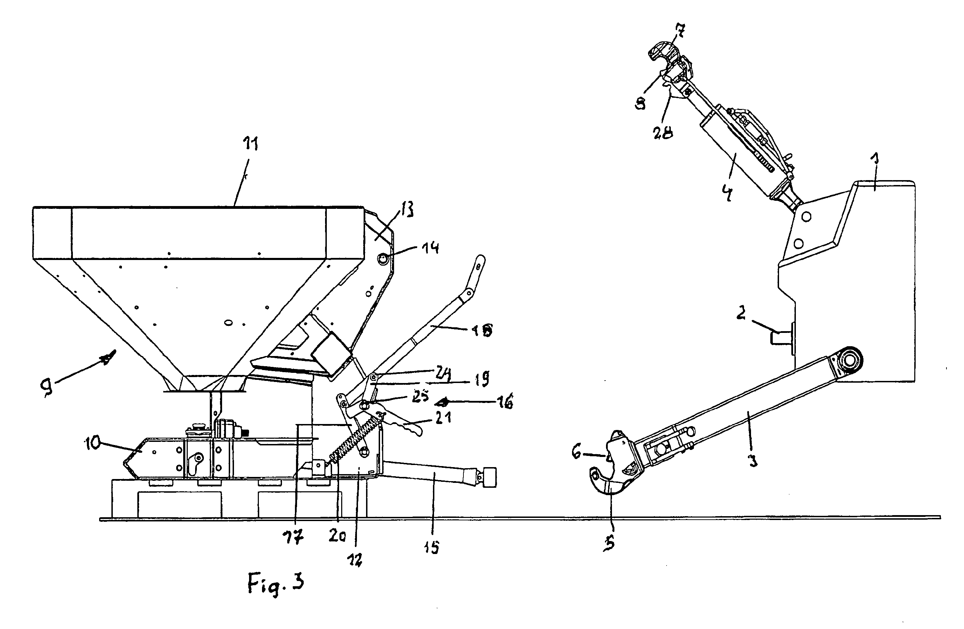

Fig. 1 zeigt die Ausgangslage vor dem Kuppelvorgang. Im nächsten Schritt (Fig. 2) wird die Koppel 18 durch Spannen der Feder 20 mittels der Handhabe 21 in Richtung Traktor geklappt und gelangt schließlich in die Position gemäß Fig. 3. Zugleich oder zuvor werden die Unterlenkerkupplersicherungen mit dem Riegel 6 geöffnet.

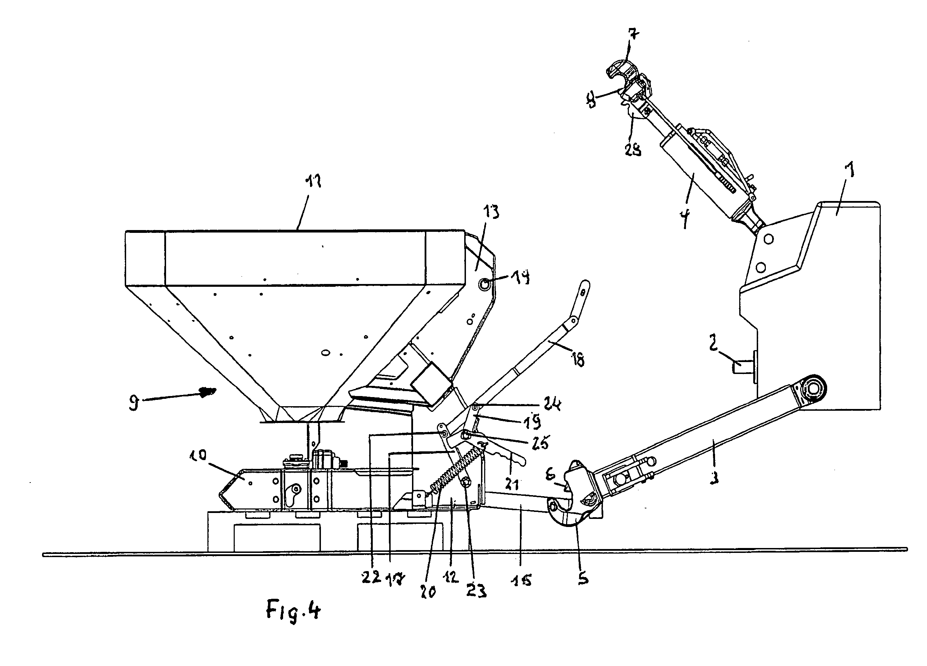

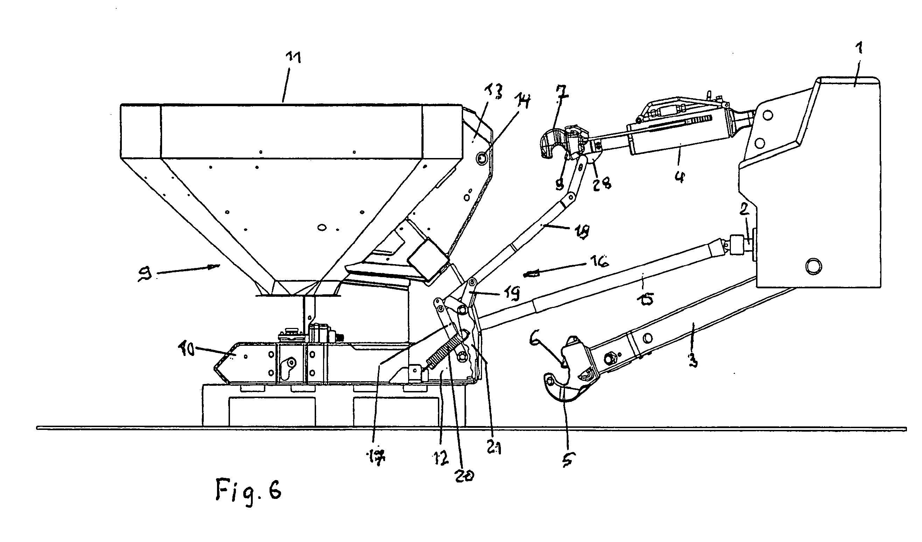

In Fig. 1 bis 3 ist der Traktor in größerem Abstand zum Anbaugerät gezeigt, was jedoch nur der Veranschaulichung dient. Er hätte auch gleich in die Position nach Fig. 4 herangefahren werden können und wird anschließend die teleskopierbare Gelenkwelle 5 an die Zapfwelle 2 des Traktors angekuppelt. In dieser Position ist noch ausreichend Freiraum zwischen Traktorheck 1 bzw. Traktorreifen und Anbaugerät 9, so dass der Bediener den Zwischenraum von der Seite her betreten kann. in der nächsten Phase gemäß Fig. 6 wird der Oberlenker 4 in das freie Ende der Koppel 18 eingehängt. Hierzu dient das Montageteil 26, in welchem der Oberlenker verrutschungssicher gehalten ist. Hierzu weist das Montageteil 26 eine sich nach oben erstreckende Vertiefung auf.

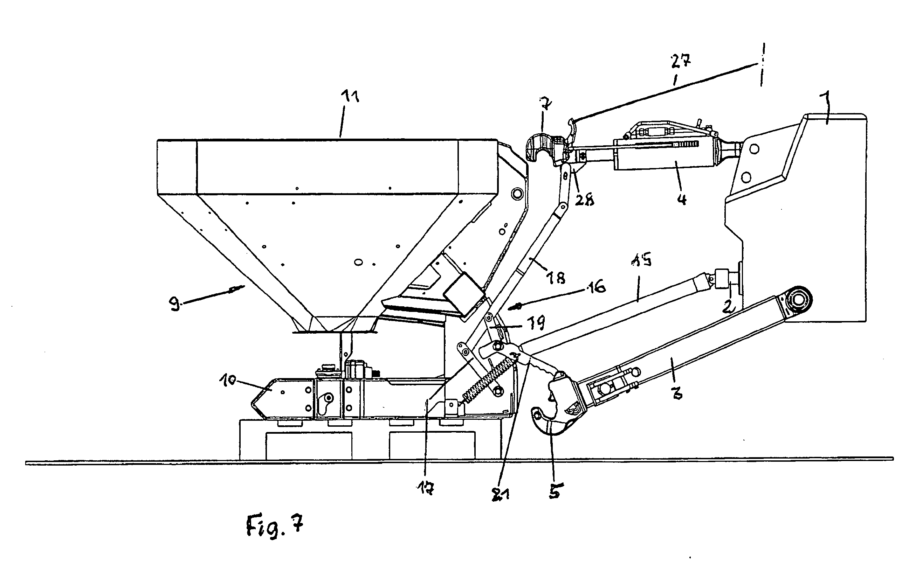

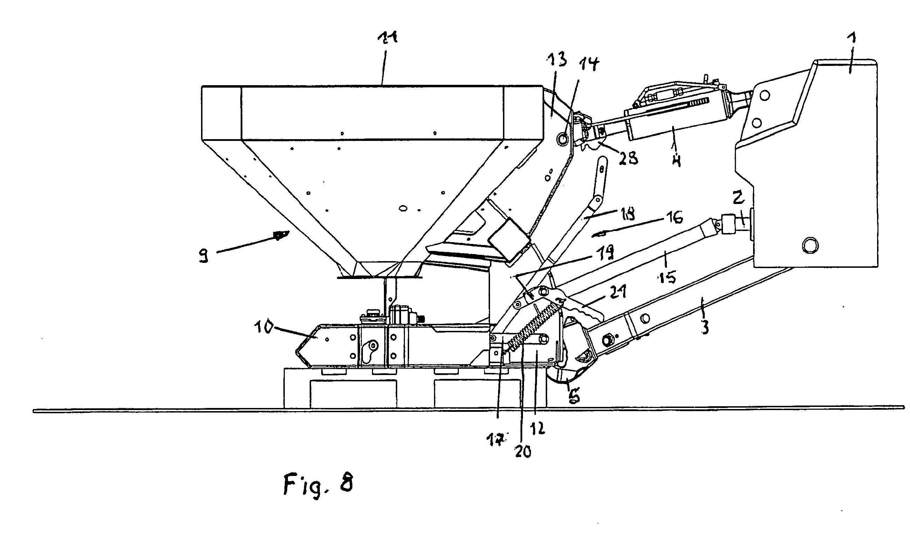

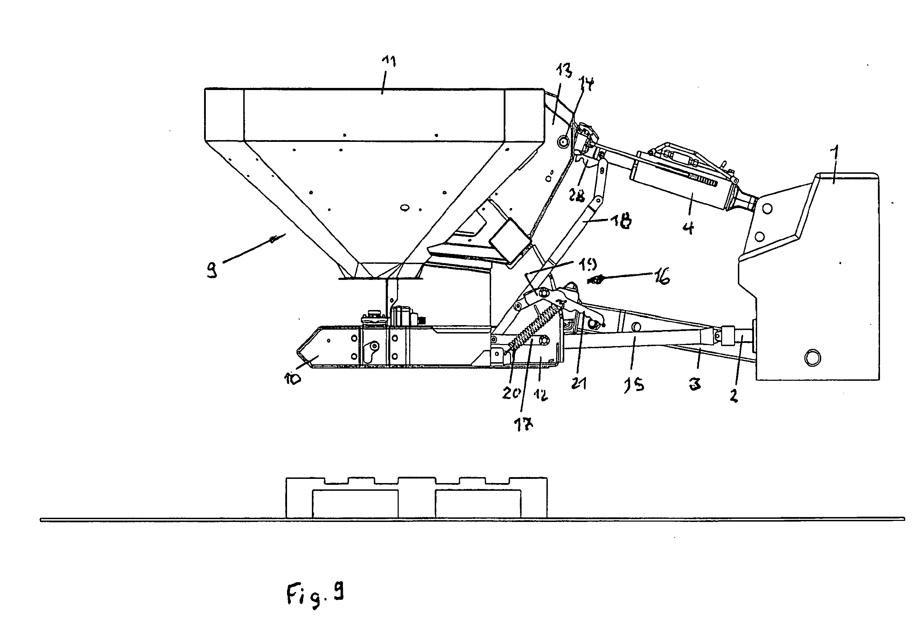

Anschließend wird die Oberlenkerkupplersicherung mit dem Riegel 8 beispielsweise mittels eines Zugseils z.B. von der Traktorkabine aus geöffnet (Fig. 7). Der Traktor fährt weiter an das Anbaugerät heran und drängt die Koppel in Richtung auf das obere Rahmenteil 13. Die Koppel führt dabei das Fangmaul 7 des Oberlenkers 4 entlang einer Kurve, deren oberer Scheitel oberhalb der den Oberlenkeranschluss einschließenden Horizontalebene liegt. Vom Scheitel der Kurve aus gelangt das Fangmaul auf dem fallenden Ast der Kurve auf den Oberlenkeranschluss 14 (Fig. 8). Auch die Unterlenker 3 werden an den Unterlenkeranschlüssen verriegelt. In Fig. 9 ist der vordere Unterlenker ausgeblendet. Auch die Unterlenker werden in dieser Traktorposition angehoben und an den Unterlenkeranschlüssen verriegelt.

Damit ist der Kuppelvorgang abgeschlossen. Die Stützvorrichtung 16 fällt unter Schwerkraft nach unten. Das Anbaugerät kann nun in die Arbeitsposition (Fig. 9) angehoben werden.

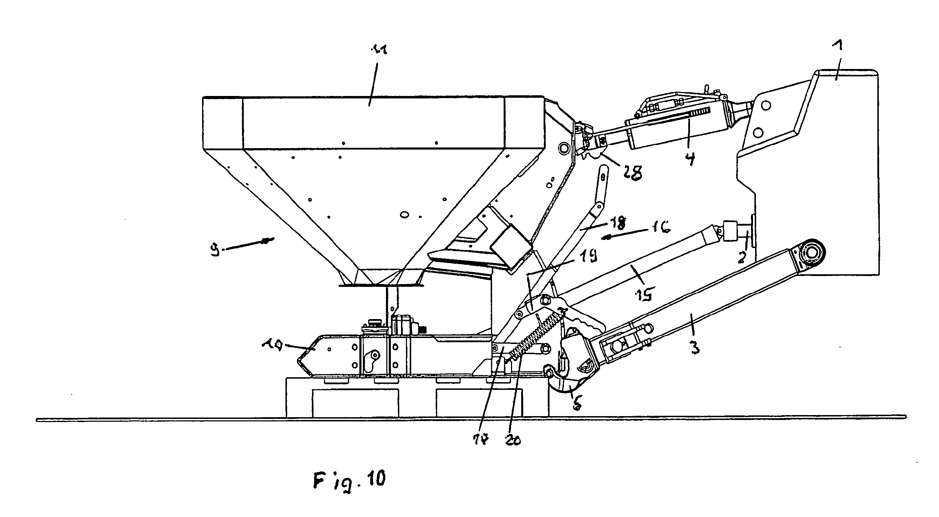

Bei dem mit der Phase gemäß Fig. 10 beginnenden Abkuppelvorgang werden zunächst die Unterlenkerschnellkupplersicherungen mit den Riegeln 6 gelöst und das freie Ende der Koppel mittels der Spannvorrichtung wieder in das Montageteil 26 eingeführt.

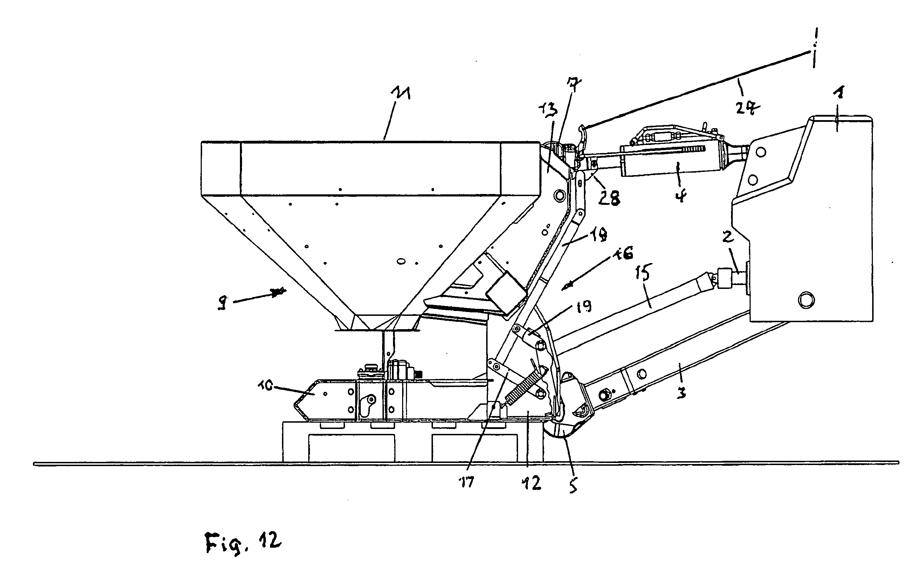

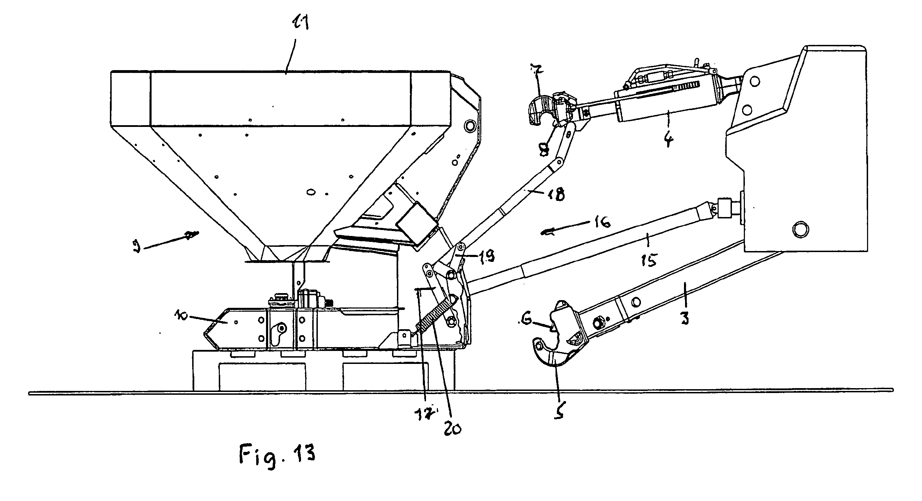

Die Oberlenkerschnellkupplersicherung mit dem Riegel 8 wird mittels des Zugseils 27 von der Traktorkabine aus gelöst. Mittels der Spannvorrichtung wird die Koppel 18 angehoben und das Fangmaul 6 des Oberlenkers 4 aus dem Oberlenkeranschluss 14 ausgehoben (Fig. 12). Bei Vorwärtsfahrt des Traktors klappt die Koppel Richtung Traktor (Fig. 13). In dieser Position wird - nachdem zuvor die Unterlenker 3 gelöst worden sind - der Oberlenker 4 in eine traktorseitige Haltung hochgeschwenkt. Nach Abkuppeln der Gelenkwelle 15 ist wieder der Ausgangszustand nach Fig. 1 erreicht.

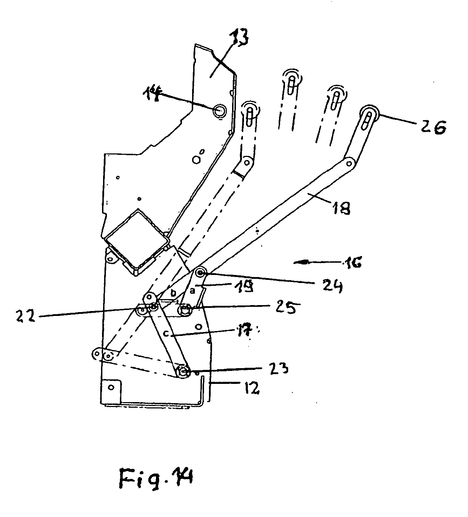

Fig. 14 zeigt schematisch die Kinematik der aus Schwinge 17, Koppel 18 und Kurbel 19 bestehenden Stützvorrichtung 16. Das freie Ende 26 der Koppel 18 beschreibt eine Kurve, deren oberer Scheitel oberhalb der den Oberlenkeranschluss 14 einschließenden Horizontalebene liegt. Die verschiedenen Positionen, die die Koppel dabei durchläuft sind strichpunktiert wiedergegeben.

### Bezugszeichenliste

- 1: Traktorheck
- 2: Zapfwelle
- 3: Unterlenker
- 4: Oberlenker
- 5: Unterlenker-Fangmaul
- 6: Riegel
- 7: Oberlenker-Fangmaul
- 8: Riegel
- 9: Anbaugerät
- 10: Rahmen
- 11: Behälter
- 12: unteres aufrechtes Rahmenteil
- 13: oberes aufrechtes Rahmenteil
- 14: Oberlenkeranschluss
- 15: Gelenkwelle
- 16: Stützvorrichtung
- 17: Schwinge
- 18: Koppel
- 19: Kurbel
- 20: Spannvorrichtung
- 21: Handhabe

- 22: Kniegelenk
- 23: Lager Schwinge/Rahmen
- 24: Gelenk-Koppel/Kurbel
- 25: Lager Kurbel/Rahmen
- 26: freies, oberes Ende von 18
- 27: Zugseil
- 28: Montageteil an 4

## Patentansprüche

1. Dreipunkt-Kuppelvorrichtung mit zwei an einem Traktor (1) oder dergleichen in horizontalem Abstand voneinander angeordneten Unterlenkern (3) mit je einem Fangmaul (5) und einem höher und mittig liegenden Oberlenker (4) mit Fangmaul (7) für ein landwirtschaftliches Anbaugerät (9), das untere Anschlusspunkte für die Unterlenker (3) und einen oberen Anschlusspunkt (14) für den Oberlenker (4) aufweist, **dadurch gekennzeichnet, dass** am Anbaugerät (9) eine Stützvorrichtung (16) begrenzt gelenkig angeordnet ist, die beim Ankuppeln das Fangmaul (7) des Oberlenkers (4) auf einer Kurve mit einem oberhalb der den Anschlusspunkt (14) einschließenden Horizontalebene liegenden Scheitel von oben her in den Anschlusspunkt eingreifend führt, wobei das Fangmaul (7) des Oberlenkers (4) und das Fangmaul (5)beider Unterlenker (3) in der Kupplungsposition durch Schnellkupplersicherungen an den Anschlusspunkten verriegelt sind.

2. Kuppelvorrichtung nach Anspruch 1, **dadurch gekennzeichnet, dass** die Stützvorrichtung (16) eine Schwinge (17), eine Koppel (18) und eine Kurbel (19) aufweist, die für die Kurvenführung des am freien Ende (20) der Koppel (18) eingehängten Oberlenkers (4) im Bereich des Fangmauls (7) sorgt.

3. Kuppelvorrichtung nach dem Anspruch 2, **dadurch gekennzeichnet, dass** die Schwinge (17) am Anbaugerät (9) gelenkig gelagert und über ein Kniegelenk (22) mit der Koppel (18) verbunden ist, und dass die Kurbel (19) am Anbaugerät (9) gelagert ist und über ein Gelenk (24) an der Koppel (18) deren freies Ende (28) auf der Kurve führt.

4. Kuppelvorrichtung nach einem der Ansprüche 2 bis 3, **dadurch gekennzeichnet, dass** zur Vorbereitung der Kupplung des Anbaugerätes (9) bei ausreichendem Abstand von Traktor (1) und Anbaugerät (9) neben dem Anschluss der Leistungs- und Steuerungsübertragungselemente und der Öffnung der Unterlenkerschnellkupplersicherung die Stützvorrichtung (16) mit der Koppel (18) bis zu einem geräteseitigen Anschlag zum Traktor (1) hin ausklappbar ist.

5. Kuppelvorrichtung nach einem der Ansprüche 2 bis 4, **dadurch gekennzeichnet, dass** die Koppel (18) mit ihrem freien Ende (28) in ein an der Unterseite des Oberlenkers (4) im Bereich des Fangmauls (7) angeordnetes Montageteil (28) eingreift und über dieses das Fangmaul verrutschungssicher auf der Kurve von oben her auf den Oberlenkeranschluss (14) führt.

6. Kuppelvorrichtung nach einem der Ansprüche 1 bis 5, **dadurch gekennzeichnet, dass** eine die Stützvorrichtung (16) belastende Spannvorrichtung (20) vorgesehen ist.

7. Kuppelvorrichtung nach Anspruch 6, **dadurch gekennzeichnet, dass** die Spannvorrichtung (20) vor dem Kuppelvorgang aktiviert wird.

8. Kuppelvorrichtung nach Anspruch 6 oder 7, **dadurch gekennzeichnet, dass** beim Entkuppeln mittels der Spannvorrichtung (20) das Fangmaul (7) des Oberlenkers (4) aus dem Oberlenkeranschluss (14) aushebbar ist.

9. Kuppelvorrichtung nach einem der Ansprüche 1 bis 8, **dadurch gekennzeichnet, dass** ein von der Traktorkabine aus zu betätigendes Zugseil (27) zur Entriegelung der Oberlenkerschnellkupplersicherung vorgesehen ist.

10. Kuppelvorrichtung nach einem der Ansprüche 1 bis 9, **dadurch gekennzeichnet, dass** ein von der Traktorkabine (1) aus zu betätigendes Zugseil zur Entriegelung der Spannvorrichtung (20) vorgesehen ist.

11. Kuppelvorrichtung nach Anspruch 9, **dadurch gekennzeichnet, dass** statt des Zugseils (27) zur Entriegelung der Oberlenkerschnellkupplersicherung ein elektrischer oder hyraulischer Aktuator vorgesehen ist.

12. Kuppelvorrichtung nach Anspruch 10, **dadurch gekennzeichnet, dass** statt des Zugseils (27) zur Entriegelung der Spannvorrichtung ein elektrischer oder hydraulischer Aktuator vorgesehen ist.

13. Kuppelvorrichtung nach Anspruch 11 oder 12, **dadurch gekennzeichnet, dass** der Aktuator zur Entriegelung der Spannvorrichtung und/oder der Aktuator zur Entriegelung der Oberlenkerschnellkupplersicherung über ein Bedienterminal betätigbar ist.

14. Kuppelvorrichtung nach Anspruch 11 oder 12, **dadurch gekennzeichnet, dass** der Aktuator zur Entriegelung der Spannvorrichtung und/oder der Aktuator zur Entriegelung der Oberlenkerschnellkupplersicherung über das Bedienterminal des Anbaugerätes oder des Traktors betätigbar ist.

15. Kuppelvorrichtung nach einem der Ansprüche 11 oder 12, **dadurch gekennzeichnet, dass** einer oder beide Aktuatoren mittels einer drahtlosen Fernbedienung betätigbar sind.

16. Kuppelvorrichtung nach einem der Ansprüche 1 bis 15,
**dadurch gekennzeichnet, dass** am Montageteil (28) an der Unterseite des Oberlenkers (4) auch der Aktuator für die Entriegelung der Oberlenkerschnellkupplersicherung integriert ist.

17. Kuppelvorrichtung nach einem der Ansprüche 1 bis 16,
**dadurch gekennzeichnet, dass** bei einem mittels Gewinde verstellbaren Oberlenker (4) die passende Einbaulänge vor dem Anbau für das entsprechende Anbaugerät (1) festlegbar ist.

18. Kuppelvorrichtung nach Anspruch 17, **dadurch gekennzeichnet, dass** ein Messstab am Anbaugerät angebracht ist, mittels dessen die Einbaulänge des Oberlenkers vor dem Kuppelvorgang einstellbar ist.

19. Kuppelvorrichtung nach Anspruch 17, **dadurch gekennzeichnet, dass** die Einbaulänge des Oberlenkers durch eine Markierung am Anbaugerät vorgemerkt ist.

20. Kuppelvorrichtung nach Anspruch 17, **dadurch gekennzeichnet, dass** am Oberlenker (4) eine Markierung oder ein angebautes Markierungselement angebracht ist, die die zum Anbaugerät passende Einbaulänge anzeigt.

21. Kuppelvorrichtung nach Anspruch 17, **dadurch gekennzeichnet, dass** im Oberlenker (4) ein Sensor eingebaut ist, mit dem die optimale Position bzw. Einbaulänge automatisiert angefahren wird.

## Claims

1. Three-point coupling device with two lower links (3) which are arranged at a horizontal distance from each other on a tractor (1) or the like and each have a catch mouth (5) and with an upper link (4) which is located higher and centrally and has a catch mouth (7) for an agricultural mounted implement (9) which has lower connecting points for the lower links (3) and an upper connecting point (14) for the upper link (4), **characterized in that** a supporting device (16) is arranged on the mounted implement (9) in an articulated manner to a limited extent, said supporting device guiding the catch mouth (7) of the upper link (4), during the coupling operation, along a curve with an apex located above the horizontal plane including the connecting point (14) so as to engage from above in the connecting point, wherein the catch mouth (7) of the upper link (4) and the catch mouth (5) of the two lower links (3) are locked in the coupling position to the connecting points by rapid-action-coupler locking means.

2. Coupling device according to Claim 1, **characterized in that** the supporting device (16) has an oscillating link (17), a connecting rod (18) and a crank (19) which ensures the curved guidance of the upper link (4), which is attached to the free end (20) of the connecting rod (18), in the region of the catch mouth (7).

3. Coupling device according to Claim 2, **characterized in that** the oscillating link (17) is mounted in an articulated manner on the mounted implement (9) and is connected to the connecting rod (18) via a toggle joint (22), and **in that** the crank (19) is mounted on the mounted implement (9) and, via a joint (24) on the connecting rod (18), guides the free end (28) thereof along the curve.

4. Coupling device according to either of Claims 2 and 3, **characterized in that**, in order to prepare the coupling of the mounted implement (9) at a sufficient distance from the tractor (1) and mounted implement (9), in addition to the connection of the power and control transmission elements and the opening of the lower link rapid-action-coupler locking means, the supporting device (16) together with the connecting rod (18) can be unfolded towards the tractor (1) as far as a stop on the implement.

5. Coupling device according to one of Claims 2 to 4, **characterized in that** the free end (28) of the connecting rod (18) engages in an installation part (28) arranged on the lower side of the upper link (4) in the region of the catch mouth (7) and, via said installation part, guides the catch mouth in a slip-proof manner along the curve from above onto the upper link connection (14).

6. Coupling device according to one of Claims 1 to 5, **characterized in that** a tensioning device (20) loading the supporting device (16) is provided.

7. Coupling device according to Claim 6, **characterized in that** the tensioning device (20) is activated before the coupling operation.

8. Coupling device according to Claim 6 or 7, **characterized in that**, during the decoupling operation, the catch mouth (7) of the upper link (4) can be lifted out of the upper link connection (14) by means of the tensioning device (20).

9. Coupling device according to one of Claims 1 to 8, **characterized in that** a pull cable (27) which can be actuated from the tractor cab is provided for unlocking the upper link rapid-action-coupler locking means.

10. Coupling device according to one of Claims 1 to 9, **characterized in that** a pull cable which can be actuated from the tractor cab (1) is provided for unlocking the tensioning device (20).

11. Coupling device according to Claim 9, **characterized in that**, instead of the pull cable (27), an electric or hydraulic actuator is provided for unlocking the upper link rapid-action-coupler locking means.

12. Coupling device according to Claim 10, **characterized in that**, instead of the pull cable (27), an electric or hydraulic actuator is provided for unlocking the tensioning device.

13. Coupling device according to Claim 11 or 12, **characterized in that** the actuator for unlocking the tensioning device and/or the actuator for unlocking the upper link rapid-action-coupler locking means can be actuated via a control terminal.

14. Coupling device according to Claim 11 or 12, **characterized in that** the actuator for unlocking the tensioning device and/or the actuator for unlocking the upper link rapid-action-coupler locking means can be actuated via the control terminal of the mounted implement or the tractor.

15. Coupling device according to either of Claims 11 and 12, **characterized in that** one or both actuators can be actuated by means of a wireless remote control.

16. Coupling device according to one of Claims 1 to 15, **characterized in that** the actuator for unlocking the upper link rapid-action-coupler locking means is also integrated on the installation part (28) on the lower side of the upper link (4).

17. Coupling device according to one of Claims 1 to 16, **characterized in that**, in the case of an upper link (4) which is adjustable by means of a thread, the appropriate fitting length for the corresponding mounted implement (1) can be fixed prior to the mounting thereof.

18. Coupling device according to Claim 17, **characterized in that** a measuring stick is attached to the mounted implement and can be used to set the fitting length of the upper link before the coupling operation.

19. Coupling device according to Claim 17, **characterized in that** the fitting length of the upper link is noted by a marking on the mounted implement.

20. Coupling device according to Claim 17, **characterized in that** a marking or a mounted marking element is attached to the upper link (4) and indicates the appropriate fitting length for the mounted implement.

21. Coupling device according to Claim 17, **characterized in that** a sensor is fitted in the upper link (4) and is used to approach the optimum position or fitting length in an automated manner.

## Revendications

1. Dispositif de couplage à trois points doté de deux bielles inférieures (3) disposées à une certaine distance l'une de l'autre par rapport à l'horizontale au niveau d'un tracteur (1) ou de son équivalent, avec respectivement une gueule de préhension (5) et une bielle supérieure (4) reposant plus haut et au centre dotée d'une gueule de préhension (7) prévue pour un appareil de culture agricole (9) comprenant des points de raccordement inférieurs pour les bielles inférieures (3) et un point de raccordement supérieur (14) pour la bielle supérieure (4), **caractérisé en ce qu'**un dispositif de maintien (16) est disposé de façon articulée et limitée au niveau de l'appareil de culture (9), ledit dispositif de maintien introduisant de façon à emboîter par en haut dans la courbe, jusqu'à atteindre le point de raccordement, la gueule de préhension (7) de la bielle supérieure (4) avec un côté reposant au-dessus du plan horizontal incluant le point de raccordement (14) lors du couplage, la gueule de préhension (7) de la bielle supérieure (4) et la gueule de préhension (5) des deux bielles inférieures (3) étant verrouillées dans la position de couplage au niveau des points de raccordement par le biais des fixations par couplage rapide.

2. Dispositif de couplage selon la revendication 1, **caractérisé en ce que** le dispositif de maintien (16) comporte une aile (17), un élément de couplage (18) et un vilebrequin (19) servant à guider dans la courbe la bielle supérieure (4) accrochée à l'extrémité libre (20) de l'élément de couplage (18) dans la région de la gueule de préhension (7).

3. Dispositif de couplage selon la revendication 2, **caractérisé en ce que** l'aile (17) est disposée de façon articulée au niveau de l'appareil de culture (9) et est reliée à l'élément de couplage (18) par le biais d'une articulation (22) et que le vilebrequin (19) est disposé au niveau de l'appareil de culture (9) et par le biais d'une articulation (24) prévue au niveau de l'élément de couplage (18) dont l'extrémité libre (28) permet de réaliser le guidage dans la courbe.

4. Dispositif de couplage selon l'une quelconque des revendications 2 à 3, **caractérisé en ce que** la préparation préalable du couplage de l'appareil de culture (9) s'effectue à une distance suffisante du tracteur (1) et de l'appareil de culture (9), à côté du raccordement des éléments de transmission de puissance et de commande et de l'ouverture de la fixation de couplage rapide de bielle inférieure, en rabattant vers l'extérieur le dispositif de maintien (16) avec l'élément de couplage (18) jusqu'à atteindre une butée côté appareil par rapport au tracteur (1).

5. Dispositif de couplage selon l'une quelconque des revendications 2 à 4, **caractérisé en ce que** l'élément de couplage (18) s'emboîte avec son extrémité libre (28) dans une partie de montage (28) disposée au niveau du côté inférieur de la bielle supérieure (4) dans la région de la gueule de préhension (7) et guide à l'aide de ladite partie de montage la gueule de préhension par en haut jusque sur le raccordement de bielle supérieure (14) sans déraper dans la courbe.

6. Dispositif de couplage selon l'une quelconque des revendications 1 à 5, **caractérisé en ce qu'**un dispositif de serrage (20) chargeant le dispositif de maintien (16) est prévu.

7. Dispositif de couplage selon la revendication 6, **caractérisé en ce que** le dispositif de serrage (20) est activé avant le processus de couplage.

8. Dispositif de couplage selon l'une quelconque des revendication 6 à 7, **caractérisé en ce que** lors du découplage à l'aide du dispositif de serrage (20), la gueule de préhension (7) de la bielle supérieure (4) est soulevée hors du raccordement de bielle supérieure (14).

9. Dispositif de couplage selon l'une quelconque des revendications 1 à 8, **caractérisé en ce qu'**un câble de traction (27) à actionner depuis la cabine du tracteur est prévu pour déverrouiller la fixation de couplage rapide de bielle supérieure.

10. Dispositif de couplage selon l'une quelconque des revendications 1 à 9, **caractérisé en ce qu'**un câble de traction à actionner depuis la cabine du tracteur (1) est prévu pour déverrouiller le dispositif de serrage (20).

11. Dispositif de couplage selon la revendication 9, **caractérisé en ce qu'**un actionneur électrique ou hydraulique est prévu à la place du câble de traction (27) pour déverrouiller la fixation de couplage rapide de bielle supérieure.

12. Dispositif de couplage selon la revendication 10, **caractérisé en ce qu'**un actionneur électrique ou hydraulique est prévu à la place du câble de traction (27) pour déverrouiller le dispositif de serrage.

13. Dispositif de couplage selon la revendication 11 ou 12, **caractérisé en ce que** l'actionneur peut être actionné pour déverrouiller le dispositif de serrage et/ou que l'actionneur peut être actionné pour déverrouiller la fixation de couplage rapide de bielle supérieure, par le biais d'un terminal de commande.

14. Dispositif de couplage selon la revendication 11 ou 12, **caractérisé en ce que** l'actionneur peut être actionné pour déverrouiller le dispositif de serrage et/ou que l'actionneur peut être actionné pour déverrouiller la fixation de couplage rapide de bielle supérieure, par le biais du terminal de commande de l'appareil de culture ou du tracteur.

15. Dispositif de couplage selon l'une quelconque des revendications 11 ou 12, **caractérisé en ce qu'**un actionneur ou les deux peuvent être actionnés par le biais d'une télécommande sans fil.

16. Dispositif de couplage selon l'une quelconque des revendications 1 à 15, **caractérisé en ce que** l'actionneur est également intégré au niveau de la partie de montage (28) prévue du côté inférieur de la bielle supérieure (4) pour déverrouiller la fixation de couplage rapide de bielle supérieure.

17. Dispositif de couplage selon l'une quelconque des revendications 1 à 16, **caractérisé en ce que** la longueur de montage adaptée peut être déterminée avant le raccordement de l'appareil de culture (1) correspondant en utilisant une bielle supérieure (4) réglable au moyen d'un filetage.

18. Dispositif de couplage selon la revendication 17, **caractérisé en ce qu'**une barre de mesure est placée au niveau de l'appareil de culture afin de régler la longueur de montage de la bielle supérieure avant le processus de couplage.

19. Dispositif de couplage selon la revendication 17, **caractérisé en ce que** la longueur de montage de la bielle supérieure est indiquée au préalable par le biais d'un marquage prévu au niveau de l'appareil de culture.

20. Dispositif de couplage selon la revendication 17, **caractérisé en ce qu'**un marquage ou un élément de marquage intégré indiquant la longueur de montage adaptée à l'appareil de culture est placé au niveau de la bielle supérieure (4).

21. Dispositif de couplage selon la revendication 17, **caractérisé en ce qu'**un capteur permettant d'atteindre automatiquement la position optimale et/ou la longueur de montage optimale est intégré dans la bielle supérieure (4).
